# FASCICULE DE BREVET EUROPEEN

(11) **EP 1 548 389 B1**
(45) Date de publication et mention de la délivrance du brevet: **14.02.2007**
(21) Numéro de dépôt: 04292852.3
(22) Date de dépôt: 02.12.2004
(51) Int. Cl.: F41A 23/24, B60N 2/14

(54) **Tourelle à siège escamotable**
Panzerturm mit einer verstaubaren Sitzeinheit
Turret with retractable seat

(30) Priorité: 23.12.2003 FR 0315266
(43) Date de publication de la demande: 29.06.2005
(73) Titulaire: GIAT Industries, 78000 Versailles Cedex (FR)
(72) Inventeur: Orgelet, Serge, 78320 Levis Saint Nom (FR)
(74) Mandataire: Célanie, Christian

(56) Documents cités:
- EP-A- 0 132 558
- DE-A- 2 544 812
- DE-B- 1 269 921
- US-A- 2 400 812
- US-A- 2 491 608

## Description

Le secteur technique de la présente invention est celui des tourelles, telles des tourelles pour véhicules blindés, et des sièges permettant l'accueil d'un servant dans une telle tourelle. L'invention concerne plus particulièrement un moyen d'escamotage dudit siège.

La tourelle permettant la rotation d'un système d'arme est typiquement intégrée sur un véhicule blindé support. Un panier de tourelle, dispositif suspendu sous une partie haute située en superstructure de la tourelle, permet l'accueil des équipements nécessaires à son fonctionnement et de l'opérateur, ou servant, du système d'arme. Le volume de la tourelle et du panier est dans la pratique réduit au minimum, afin d'occuper le moins de place possible à l'intérieur du véhicule support. La tourelle comprend généralement un siège, solidaire du panier, à l'intérieur de ce dernier, permettant d'accueillir et de supporter le servant pendant sa mission. Lorsqu'il n'est pas en poste, le servant peut quitter la tourelle. Il dispose pour cela d'un passage pratiqué dans le panier de tourelle, lui permettant de quitter la tourelle, pour rejoindre l'intérieur du véhicule support. La position généralement centrale du siège devient alors un obstacle au mouvement du servant. Il est connu pour gagner de la place, de réaliser un siège dont le volume est réductible, par pliage sur lui-même. Un tel siège est connu du brevet EP 0132558. Un tel siège présente plusieurs inconvénients. Un premier inconvénient est de présenter un volume résiduel, une fois plié, souvent non négligeable. Un second inconvénient est que ce pliage conduit le plus souvent à modifier les réglages ergonomiques dudit siège.

La présente invention vise à résoudre ce problème, sans faire apparaître ces différents inconvénients, en proposant d'escamoter le siège, en le déplaçant pour le faire sortir de l'espace interne au panier de tourelle.

L'invention a pour objet une tourelle comprenant une couronne fixe, une partie haute mobile en rotation autour d'un premier axe vertical, relativement à la couronne fixe, un panier de tourelle solidairement fixé en dessous de la partie haute, un siège relié au panier de tourelle, permettant à un servant de s'asseoir lorsqu'il sert la tourelle et un passage pratiqué à travers le panier de tourelle permettant au servant de quitter la tourelle, caractérisée en ce que ledit siège comprend un dispositif mécanique le reliant au panier de tourelle et permettant audit siège d'être déplacé, entre une position de service située à l'intérieur du panier de tourelle et une position escamotée située à l'extérieur du panier de tourelle.

Selon une caractéristique de l'invention, le dispositif mécanique comprend un second axe de rotation, sensiblement parallèle au premier axe, permettant une rotation du siège, entre la position de service et la position escamotée.

Avantageusement selon l'invention, le siège traverse le panier au travers du passage, pour se déplacer entre la position de service et la position escamotée.

Selon une autre caractéristique de l'invention, le dispositif mécanique comprend un moyen de verrouillage du siège dans des positions, ces positions comprenant au moins la position de service et la position escamotée.

Selon une autre caractéristique de l'invention, le moyen de verrouillage comprend une commande de déverrouillage manoeuvrable par le servant et un moyen de rappel assurant automatiquement le verrouillage lorsque le siège est dans lesdites positions.

Selon une autre caractéristique de l'invention, la commande de déverrouillage comprend un premier organe de manoeuvre situé dans le panier de tourelle, accessible au servant lorsqu'il est assis sur le siège, lui permettant de déverrouiller ledit siège depuis la position de service.

Selon une autre caractéristique de l'invention, la commande de déverrouillage comprend un second organe de manoeuvre situé sous le siège, permettant de déverrouiller le siège depuis la position escamotée.

Selon une autre caractéristique de l'invention, la tourelle comprend une porte pouvant obturer le passage et un dispositif d'ouverture de ladite porte commandé par le déplacement du siège entre la position de service et la position escamotée afin de libérer le passage lors du déplacement du siège.

Selon une autre caractéristique de l'invention, la tourelle comprend un premier dispositif de sécurité bloquant le siège en position de service, tant que la tourelle n'est pas dans une orientation de repos.

Selon une autre caractéristique de l'invention, la tourelle comprend un second dispositif de sécurité bloquant la tourelle en orientation de repos, tant que le siège n'est pas dans la position de service.

Un avantage du dispositif selon l'invention est de permettre de libérer totalement le panier de tourelle, du volume occupé par le siège.

Un autre avantage du dispositif selon l'invention est de ne nécessiter aucune ouverture spécifique dans le panier de tourelle.

Un autre avantage du dispositif selon l'invention est de permettre un mouvement en bloc du siège, sans modifier ses réglages ergonomiques.

Un autre avantage du dispositif selon l'invention est de permettre un déplacement aisé du siège, tant lors de sa sortie que de sa rentrée dans le panier.

D'autres caractéristiques, détails et avantages de l'invention ressortiront plus clairement de la description détaillée donnée ci-après, à titre indicatif, en relation avec des dessins sur lesquels :
- la figure 1 est une vue globale de la tourelle en perspective, le siège étant représenté en position de service,
- la figure 2 est une vue globale de la tourelle en perspective, le siège étant représenté en position escamotée,
- la figure 3 est une vue perspective de la tourelle présentant les commandes de déverrouillage.

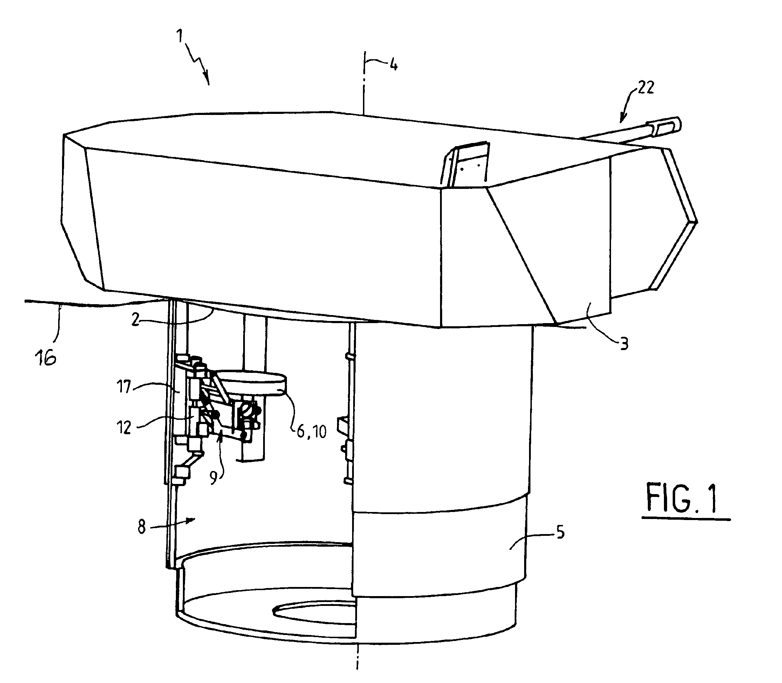

Sur la figure 1, on a représenté une vue perspective d'une tourelle 1 comprenant une partie haute 3 supportant différents équipements d'observation ou d'action, permettant la mise en oeuvre d'un système d'arme embarqué sur la tourelle 1. Sous cette partie haute 3, on distingue, solidairement fixé suspendu, un panier 5 de tourelle permettant d'embarquer dans la tourelle 1 des équipements nécessaires à la mise en oeuvre du système d'arme. L'ensemble constitué par cette partie haute 3 et le panier 5 de tourelle constitue un ensemble sensiblement cylindrique. Cet ensemble est mobile en rotation autour de l'axe 4 dudit cylindre, sensiblement vertical. Cette rotation permet d'orienter le système d'arme sur 360°. Une couronne fixe 2, constituée d'un roulement à billes de grand diamètre, est montée autour du panier 5 de tourelle, sous la partie haute 3. Sur la figure, cette couronne 2 est masquée par la partie haute 3. Cette couronne est constituée de deux cages concentriques roulant l'une par rapport à l'autre. Une de ces cages est solidaire de la partie haute 3 et l'autre est solidaire du support 16 de la tourelle, représenté ici schématiquement. Ceci permet la rotation de l'ensemble constitué par la partie haute 3 et le panier 5 de tourelle relativement au support 16. Le support 16 est par exemple un bâtiment fixe ou mobile. Il s'agit par exemple, d'un abri ou shelter, pouvant être fixe ou mobile, d'une construction fortifiée, d'un navire ou d'un véhicule. La tourelle est intégrée dans le support 16 de telle sorte que la partie haute 3 soit en saillie, permettant au système d'arme d'accéder à l'extérieur pour fonctionner en observation et en action, alors que le panier 5 de tourelle est logé à l'intérieur du support, ce dernier assurant la protection dudit panier 5 de tourelle. La tourelle 1 peut accueillir un servant 7 qui sert la tourelle 1. Ce servant dispose de commandes lui permettant de mobiliser la tourelle 1 et de mettre en oeuvre le système d'arme. Il se tient généralement, durant son service, à l'intérieur du panier 5 de tourelle. Afin d'accueillir ce servant 7, de le supporter et de l'aider à s'immobiliser relativement à cette tourelle 1, qui se meut en rotation et qui peut de plus être ballottée par les déplacements induits par le véhicule support, la tourelle 1 comporte un siège 6. Ce siège 6 est typiquement solidaire du panier 5 de tourelle et accroché à l'intérieur de ce dernier. La liaison entre le siège et le panier 5 de tourelle est assurée par un dispositif mécanique 9. Le siège 6 comprend au moins une assise horizontale. Il peut de plus, selon les cas, comprendre de plus divers appuis accessoires tels des accoudoirs, des repose-poignets, des repose-pieds ou encore des poignées afin d'aider le servant 7 à se maintenir en place malgré les mouvements de la tourelle 1. La figure 1 présente plus particulièrement le siège 6 en position de service 10. Dans cette position, le siège est situé et immobilisé à l'intérieur du panier 5 de tourelle. Le servant 7 peut s'asseoir dessus. Le servant 7 est alors à son poste de service. Il est en position pour servir la tourelle 1. Dans cette position, il a accès à l'ensemble des commandes nécessaires à l'accomplissement de sa mission. Le siège 6 est avantageusement réglable, par exemple en hauteur, afin de permettre une adaptation ergonomique aux dimensions corporelles du servant 7. Ces réglages, obtenus de manière connue, sont rendus possibles grâce à des dispositifs intégrés dans le dispositif mécanique 9 supportant le siège. Il est à noter que l'assise du siège peut être réglable indépendamment des appuis et accessoires divers. Cependant, l'ensemble de l'assise et des appuis constitue le siège 6 et c'est l'ensemble qui peut être escamoté. Le siège 6, très utile en position de service 10 pour soutenir le servant 7 à son poste, devient très encombrant lorsque ce même servant 7 souhaite quitter son poste. Le servant 7 peut quitter la tourelle 1, vers l'extérieur, par une trappe située dans la partie haute 3. Le servant 7 peut aussi quitter la tourelle 1, vers le support de la tourelle, par exemple le véhicule support, en empruntant un passage 8 pratiqué dans le flanc du panier 5 de tourelle. Ce passage peut être, le cas échéant, obturé par une porte non représentée sur les figures pour des raisons de clarté du dessin. Compte tenu des dimensions intérieures réduites du panier 5 de tourelle, la présence du siège 6 avec ses accessoires et le dispositif mécanique 9 peuvent considérablement gêner le passage du servant 7, que ce soit pour entrer ou pour sortir de la tourelle 1. Une des caractéristiques essentielles de l'invention est de permettre, par une disposition particulière du dispositif mécanique 9 d'escamoter totalement le siège 6, en le déplaçant pour le placer à l'extérieur du panier 5 de tourelle. Ceci est rendu possible par la présence, au niveau du dispositif mécanique 9, d'un moyen de mobilité permettant ce mouvement. Ce moyen de mobilité peut être varié. Il suffit qu'il permette de déplacer le siège 6 de sa position de service 10 précédemment décrite, jusqu'à une position escamotée 11, située hors du panier 5 de tourelle.

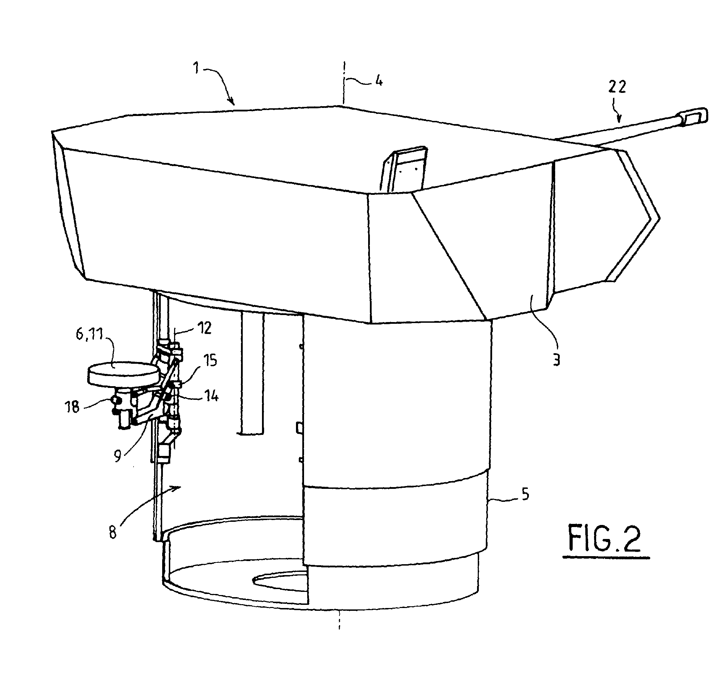

La figure 2 illustre une tourelle 1, dans la configuration où le siège 6 est en position escamotée 11. Le dispositif mécanique 9 peut ainsi comprendre un mécanisme complexe ou une association de plusieurs mécanismes et présenter plusieurs degrés de liberté. Ces mécanismes sont intercalés entre le panier 5 et l'ensemble des dispositifs associés au siège 6, tels que les appuis, accessoires et réglages dudit siège. Avantageusement, on retiendra une réalisation simple comprenant un unique degré de liberté. Ce degré de liberté peut être une glissière. Selon un mode de réalisation préférentiel, un degré de liberté rotatif est utilisé. Une telle rotation est réalisée comme le montre la figure 1 par un second axe 12 de rotation sensiblement parallèle au premier axe de rotation 4, et donc vertical dans le plan de la figure.

Le siège dans son déplacement depuis la position de service 10 vers la position escamotée 11 doit traverser l'épaisseur du panier 5 de tourelle. Pour ce faire, il est possible de réaliser une ouverture dédiée dans le panier 5 de tourelle. Selon un mode de réalisation avantageux de l'invention, le passage 8, déjà existant pour le servant 7, est utilisé pour permettre la traversée du panier 5 par le siège 6.

La tourelle étant mobile, le siège 6 est avantageusement immobilisé en position en dehors de ses phases de déplacement. Le siège peut être déplacé entre des positions 10, 11, sur lesquelles il est immobilisable. Il est indispensable que le siège 6 soit immobilisé en position de service 10 avant que le servant 7 n'y prenne place. Il est préférable qu'il le soit aussi en position escamotée 11. Il peut être utile de disposer d'autres positions intermédiaires, dans lesquelles le siège 6 peut être immobilisé. L'immobilisation est réalisée par un moyen de verrouillage. Ce moyen de verrouillage est par exemple intégré au dispositif mécanique 9. Ce moyen de verrouillage peut être réalisé par un dispositif de type doigt amovible ou tout autre dispositif d'indexage équivalent, interdisant une rotation du siège 6 autour du second axe de rotation 12. Afin de pouvoir déplacer le siège 6 entre deux positions 10, 11, le moyen 14 de verrouillage doit pouvoir être déverrouillé. A cet effet, il comprend une commande de déverrouillage 15. Cette commande 15 de déverrouillage est avantageusement prévue pour être manoeuvrée par le servant 7. Avantageusement pour la sécurité et la facilité de manipulation, le moyen 14 de verrouillage est tel qu'il se verrouille automatiquement lors du passage du siège 6 sur une des positions sous l'action d'un moyen de rappel. Ainsi, dans le cas illustratif d'un doigt pénétrant dans un alésage, un alésage étant associé à chacune des positions 10, 11, afin d'empêcher la rotation autour de l'axe 12, le doigt tend à pénétrer dans l'alésage sous l'action automatique d'un moyen de rappel élastique, par exemple un ressort. La commande de déverrouillage 15 est par exemple une poignée solidaire du doigt et permettant au servant 7, en appliquant un effort contre le moyen de rappel, de faire sortir le doigt hors de l'alésage et ainsi de libérer le déplacement du siège 6 en rotation. Si le servant 7 relâche son effort, le doigt sous l'action du moyen de rappel tentera de revenir en place, et dès que possible, pénétrera dans un alésage afin de bloquer le siège 6 dans une position 13. Ce cas survient dès que le déplacement du siège l'amène dans une des positions. Le siège est alors automatiquement bloqué dans cette position.

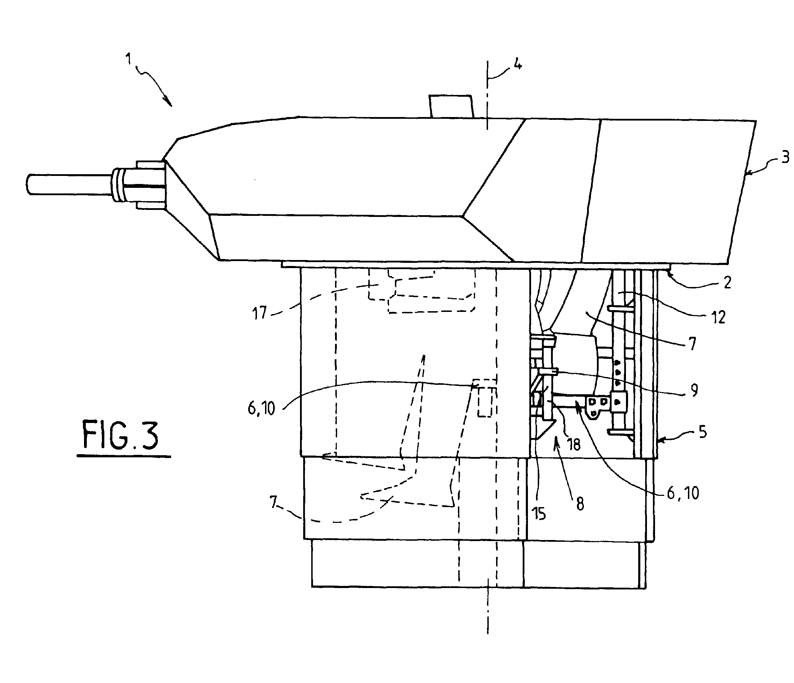

La figure 3 illustre une tourelle 1 selon l'invention. Deux servants 7 sont présents à leurs postes sur des sièges 6. Sur la figure 3 sont indiqués deux organes de manoeuvre 17 et 18 de la commande de déverrouillage 15, pour le siège 6 du servant 7 de gauche, dans le plan de la figure.

Selon le cas d'utilisation de la commande de déverrouillage, le servant est placé différemment. Lorsqu'il souhaite déverrouiller le siège 6 depuis la position de service 10, le servant 7 est généralement assis sur ledit siège 6. Il lui est avantageux de disposer d'un premier organe de manoeuvre 17, de la commande de déverrouillage 15, accessible depuis cette position. Dans un mode de réalisation avantageux, un premier organe de manoeuvre 17 est placé, par exemple devant le servant 7, au niveau des autres commandes de la tourelle 1 ou du système d'arme, de manière à être accessible du servant 7, lorsque ce dernier est assis sur le siège 6. Le servant 7 peut alors, à l'aide d'une main, déverrouiller le siège 6. En même temps, il peut se mettre debout pour libérer ledit siège 6 et le repousser autour de son axe de rotation 12, pour lui faire atteindre la position escamotée 11, libérant ainsi l'espace à l'intérieur du panier 5 et le passage 8, permettant au servant 7 de sortir du panier 5 de tourelle.

De manière analogue, lorsqu'il souhaite déverrouiller le siège 6 depuis la position escamotée 11, le servant 7 est généralement debout à côté dudit siège 6. Il lui est avantageux de disposer d'un second organe de manoeuvre 18, de la commande de déverrouillage, accessible dans cette position. Dans un mode de réalisation avantageux, un second organe de manoeuvre 18 est disposé au niveau du siège 6, par exemple sous l'assise, intégré au dispositif mécanique 9. un tel organe 18 se trouve ainsi devant le servant 7, accessible à la manoeuvre. Le servant 7 peut alors déverrouiller le siège 6 et le tirer vers lui autour de son axe de rotation 12, afin de l'amener en position de service 10, où le siège 6 se bloque automatiquement.

Dans une réalisation optionnelle de la tourelle 1, il est possible que le passage 8 soit obturable par une porte. Dans ce cas, le passage 8 n'est pas libre pour permettre le déplacement du siège 6. Un mode de réalisation avantageux, selon l'invention, intègre au dispositif mécanique 9, un dispositif d'ouverture 19 de ladite porte, directement lié, afin d'être mis en mouvement par le déplacement du siège 6. Ainsi lorsque le siège 6 est déplacé d'une position à une autre, le siège 6 actionne ledit dispositif d'ouverture 19, qui lui-même entraîne la porte afin de l'ouvrir, libérant le passage 8, avant que le siège 6 ne l'emprunte. Ce dispositif d'ouverture est, par exemple, une biellette reliant le siège 6 à la porte.

Le gabarit du panier 5 de tourelle, ou volume décrit par le panier 5 de tourelle au cours de sa rotation, occupe généralement un volume important dans le véhicule support. Il est fréquent que la largeur libre entre ce gabarit du panier 5 et l'intérieur du véhicule support soit très faible. Il en résulte alors, que la rotation dudit panier 5, lorsque le siège 6 est en dehors du panier 5, en position escamotée 11, soit rendue impossible, sans que le siège 6 ne vienne rencontrer les parois internes du véhicule support. Il existe au moins une orientation de la tourelle, dite orientation de repos 22, dans laquelle un dégagement suffisant est disponible devant le passage 8 pour permettre au servant de sortir du panier 5. Cette orientation de repos 22 est aussi favorable à la sortie du siège 6, et conforte le choix avantageux du passage 8 pour réaliser la traversée du panier 5, par le siège 6. Dans une telle configuration exiguë, il est avantageux de sécuriser les mouvements respectifs d'une part de rotation de la tourelle 1 et d'autre part d'escamotage du siège 6 à l'extérieur du panier 5. Dans ce but, ces deux mouvements s'interdisent mutuellement. Ceci est réalisé par un inter-verrouillage des ces deux mouvements. Lorsque la tourelle 1 est en orientation de repos 22, il est possible de déplacer librement le siège 6, pour l'amener soit dans la position de service 10, soit dans la position escamotée 11. Tant que le siège reste en position escamotée 11, tout mouvement de rotation de la tourelle 1 est interdit. De manière similaire, tant que la tourelle 1 n'est pas arrêtée dans l'orientation de repos 22, le siège 6, qui est nécessairement en positon de service 10, ne peut être déplacé en position escamotée 11. Ainsi la sécurité tant de la tourelle 1, que du siège 6 sont assurées. Ces inter-verrouillages peuvent être réalisés par des moyens mécaniques, le cas échéant complétés par des moyens électriques.

## Revendications

1. Tourelle (1) comprenant une couronne fixe (2), une partie haute (3), mobile en rotation, autour d'un premier axe (4) vertical, relativement à la couronne fixe (2), un panier (5) de tourelle solidairement fixé en dessous de la partie haute (3), un siège (6) relié au panier (5) de tourelle, permettant à un servant (7) de s'asseoir lorsqu'il sert la tourelle (1) et un passage (8) pratiqué à travers le panier (5) de tourelle, permettant au servant (7) de quitter la tourelle (1), ledit siège (6) comprenant un dispositif mécanique (9), le reliant au panier (5) de tourelle, **caractérisée en ce que** ledit dispositif mécanique permet audit siège (6) d'être déplacé entre une position de service (10), située à l'intérieur du panier (5) de tourelle et une position escamotée (11) située à l'extérieur du panier (5) de tourelle.

2. Tourelle (1) selon la revendication 1, **caractérisée en ce que** le dispositif mécanique (9) comprend un second axe (12) de rotation, sensiblement parallèle au premier axe (4), permettant une rotation du siège, entre la position de service (10) et la position escamotée (11).

3. Tourelle (1) selon la revendication 1 ou 2, **caractérisée en ce que** le siège (6) traverse le panier (5) au travers du passage (8), pour se déplacer entre la position de service (10) et la position escamotée (11).

4. Tourelle (1) selon l'une quelconque des revendications 1 à 3, **caractérisée en ce que** le dispositif mécanique (9) comprend un moyen (14) de verrouillage du siège (6) dans des positions (13), ces positions (13) comprenant au moins la position de service (10) et la position escamotée (11).

5. Tourelle (1) selon la revendication 4, **caractérisée en ce que** le moyen (14) de verrouillage comprend une commande de déverrouillage (15) manoeuvrable par le servant (7) et un moyen de rappel assurant automatiquement le verrouillage lorsque le siège est dans lesdites positions (13).

6. Tourelle (1) selon la revendication 5, **caractérisée en ce que** la commande de déverrouillage (15) comprend un premier organe (17) de manoeuvre situé dans le panier (5) de tourelle, accessible au servant (7) lorsqu'il est assis sur le siège (6), lui permettant de déverrouiller ledit siège (6) depuis la position de service (10).

7. Tourelle (1) selon la revendication 5 ou 6, **caractérisée en ce que** la commande de déverrouillage comprend un second organe (18) de manoeuvre situé sous le siège (6), permettant de déverrouiller le siège (6) depuis la position escamotée (11) lors du déplacement du siège (6).

8. Tourelle (1) selon l'une quelconque des revendications 1 à 7, **caractérisée en ce qu**'elle comprend une porte pouvant obturer le passage (8) et un dispositif d'ouverture de ladite porte commandé par le déplacement du siège (6) entre la position de service (10) et la position escamotée (11) afin de libérer le passage (8).

9. Tourelle (1) selon l'une quelconque des revendications 1 à 8, **caractérisée en ce qu**'elle comprend un premier dispositif de sécurité bloquant le siège (6) en position de service (10) tant que la tourelle (1) n'est pas dans une orientation de repos (22).

10. Tourelle (1) selon l'une quelconque des revendications 1 à 9, **caractérisée en ce qu**'elle comprend un second dispositif de sécurité bloquant la tourelle (1) en orientation de repos (22) tant que le siège (1) n'est pas dans la position de service (10).

## Claims

1. A turret (1) comprising a fixed support ring (2), an upper part (3) able to rotate around a fist vertical pin (4), with respect to the fixed support ring (2), a turret cage (5) made integral with the upper part (3), a seat (6) connected to the turret cage (5) to enable an operator (7) to sit down when operating the turret (1) and a passage (8) made through the turret cage (5) enabling said operator (7) to leave the turret (1), said seat (6) comprising a mechanical device (9) connecting it to the turret cage (5), **characterised in that** said mechanical device enables said seat (6) to be moved between a service position (10) located inside the turret cage (5) and a retracted position (11) located outside the turret cage (5).

2. A turret (1) according to Claim 1, **characterised in that** the mechanical device (9) comprises a second hinge pin (12), substantially parallel to the first pin (4), enabling the seat to be swivelled between the service position (10) and the retracted position (11).

3. A turret (1) according to Claims 1 or 2, **characterised in that** the seat (6) moves through the cage (5) via the passage (8) in order to be moved between the service position (10) and the retracted position (11).

4. A turret (1) according to any one of Claims 1 to 3, **characterised in that** the mechanical device (9) comprises means (14) to lock the seat (6) in its positions (13), these positions (13) comprising at least the service position (10) and the retracted position (11).

5. A turret (1) according to Claim 4, **characterised in that** the locking means (14) comprise an unlocking control (15) that may be manoeuvred by the operator (7) and return means to automatically ensure locking when the seat is in said positions (13).

6. A turret (1) according to Claim 5, **characterised in that** the unlocking control (15) comprises a first manoeuvring organ (17) located in the turret cage (5) and accessible to the operator (7) when he is sitting in the seat (6), thereby enabling him to unlock said seat (6) from the service position (10).

7. A turret (1) according to Claim 5 or 6, **characterised in that** the unlocking control comprises a second manoeuvring organ (18) located under the seat (6) enabling the seat (6) to be unlocked from the retracted position (11) during the displacement of the seat (6).

8. A turret (1) according to any one of Claims 1 to 7, **characterised in that** it comprises a door able to block the passage (8) and an opening device for said door controlled by the movement of the seat (6) between its service position (10) and its retracted position (11) so as to free the passage (9).

9. A turret (1) according to any one of Claims 1 to 8, **characterised in that** it comprises a first safety device blocking the seat (6) in its service position (10) until such time as the turret (1) is in its rest position (22).

10. A turret (1) according to any one of Claims 1 to 9, **characterised in that** it comprises a second safety device blocking the turret (1) in its rest position (22) until such time as the seat is in its service position (10).

## Patentansprüche

1. Drehturm (1) umfassend einen festen Kranz (2), einen oberen, bezüglich des festen Kranzes (2) um eine erste vertikale Achse (4) drehbeweglichen Teil (3), einen Drehturm-Korb (5), der fest unter dem oberen Teil (3) befestigt ist, einen mit dem Drehturm-Korb (5) verbundenen Sitz (6), der es einem Bedienmann (7) ermöglicht, sich zu setzen, wenn er den Drehturm (1) bedient, und einen durch den Drehturm-Korb (5) eingearbeiteten Durchgang (8), der es dem Bedienmann (7) ermöglicht, den Drehturm (1) zu verlassen, wobei der genannte Sitz (6) eine mechanische Vorrichtung (9) umfasst, die ihn mit dem Drehturm-Korb (5) verbindet, **dadurch gekennzeichnet, dass** die genannte mechanische Vorrichtung dem genannten Sitz (6) ermöglicht, zwischen einer sich im Inneren des Drehturm-Korbes (5) befindlichen Betriebsposition (10) und einer sich außerhalb des Drehturm-Korbes (5) befindlichen weggeschwenkten Position (11) verlagert zu werden.

2. Drehturm (1) nach Anspruch 1, **dadurch gekennzeichnet, dass** die mechanische Vorrichtung (9) eine zur ersten Achse (4) im Wesentlichen parallele zweite Drehachse (12) umfasst, die eine Drehung des Sitzes zwischen der Betriebsposition (10) und der weggeschwenkten Position (11) ermöglicht.

3. Drehturm (1) nach Anspruch 1 oder 2, **dadurch gekennzeichnet, dass** der Sitz (6) den Korb (5) durch den Durchgang (8) hindurch durchquert, um sich zwischen der Betriebsposition (10) und der weggeschwenkten Position (11) zu verlagern.

4. Drehturm (1) nach irgendeinem der Ansprüche 1 bis 3, **dadurch gekennzeichnet, dass** die mechanische Vorrichtung (9) ein Mittel (14) zum Verriegeln des Sitzes (6) in Positionen (13) umfasst, wobei diese Positionen (13) wenigstens die Betriebsposition (10) und die weggeschwenkte Position (11) umfassen.

5. Drehturm (1) nach Anspruch 4, **dadurch gekennzeichnet, dass** das Mittel (14) zum Verriegeln eine vom Bedienmann (7) handhabbare Betätigung zum Entriegeln (15) und ein Rückstellmittel umfasst, das automatisch die Verriegelung gewährleistet, wenn sich der Sitz in den genannten Positionen (13) befindet.

6. Drehturm (1) nach Anspruch 5, **dadurch gekennzeichnet, dass** die Betätigung zur Entriegelung (15) ein erstes sich im Drehturm-Korb (5) befindliches Betätigungsorgan (17) umfasst, das dem Bedienmann (7) zugänglich ist, wenn er auf dem Sitz (6) sitzt, welches es ihm ermöglicht, den genannten Sitz (6) aus der Betriebsposition (10) zu entriegeln.

7. Drehturm (1) nach Anspruch 5 oder 6, **dadurch gekennzeichnet, dass** die Betätigung zur Entriegelung ein sich unter dem Sitz (6) befindliches zweites Betätigungsorgan (18) umfasst, das es ermöglicht, den Sitz (6) aus der weggeschwenkten Position (11) bei der Verlagerung des Sitzes (6) zu entriegeln.

8. Drehturm (1) nach irgendeinem der Ansprüche 1 bis 7, **dadurch gekennzeichnet, dass** er eine Tür umfasst, welche den Durchgang (8) verschließen kann und eine Vorrichtung zum Öffnen der genannten Tür, die von der Verlagerung des Sitzes (6) zwischen der Betriebsposition (10) und der weggeschwenkten Position (11) betätigt wird, um den Durchgang (8) freizugeben.

9. Drehturm (1) nach irgendeinem der Ansprüche 1 bis 8, **dadurch gekennzeichnet, dass** er eine erste Sicherheitsvorrichtung umfasst, die den Sitz (6) in Betriebsposition (10) blockiert, solange sich der Drehturm (1) nicht in einer Ruhe-Ausrichtung (22) befindet.

10. Drehturm (1) nach irgendeinem der Ansprüche 1 bis 9, **dadurch gekennzeichnet, dass** er eine zweite Sicherheitsvorrichtung umfasst, die den Drehturm (1) in Ruhe-Ausrichtung (22) blockiert, solange sich der Sitz (1) nicht in der Betriebsposition (10) befindet.
